# EUROPEAN PATENT APPLICATION

(11) **EP 2 884 753 A1**
(43) Date of publication of application: **17.06.2015**
(21) Application number: 13197141.8
(22) Date of filing: 13.12.2013
(51) Int. Cl.: H04N 21/236, H04N 21/2362

(54) **Method and system for digital video broadcasting service multiplexing**

(71) Applicant: Advanced Digital Broadcast S.A., 1292 Geneva (CH)
(72) Inventor: Szaj, Adam, 65-119 Zielona Gora (PL)
(74) Representative: Blonski, Pawel

(57) **Abstract**

A system for digital video broadcasting (DVB) services multiplexing, the system being comprises: at least two inputs configured to receive at least two MPEG data streams each including at least one service signaled according to DVB PSI standard; an input preprocessor and PSI parser configured to analyze the content of the services on the basis of PAT and PMT sections; a user defined configuration module configured to receive input selecting at least one parent service and at least one child service to be merged with the parent service and output; an input preprocessor and PSI parser configured to receive and select allowable packets for further processing; a PSI module configured to inform the system, regarding content of the output services and changes in the output services; whereas the PSI module is further configured to monitor each addition or update of existing PAT and PMT sections in order to automatically apply changes in the parent service merged with the child service; a PID matrix module configured to provide a mapping mechanism between the input PIDs and the output PIDs; and at least one output configured to output the parent service merged with the child service by selectively applying the mapping.

## Description

The present invention relates to method and system for digital video broadcasting service(s) multiplexing. The method finds its applicability in television headends and gateways such as home gateways.

Nowadays, television systems in practice use only compressed data transmission in a form of compressed data streams. The most common format is MEPG used throughout the world

MPEG-2 systems layer specifies integration and synchronization of elementary streams (ES) such as audio and video streams, as well as an unlimited number of data and control streams that can be used for various applications such as subtitles in multiple languages. This is accomplished by first packetizing the ESs thus forming packetized elementary streams (PES). The PES may be considered a single channel (service).

The data of ESs are multiplexed in an output stream that is created by appropriate multiplexing system operating according to predefined rules, filters etc.

The services may be formatted according to Digital Video Broadcasting specification called PSI/SI (Program Specific Information/Service Information). The PSI data as defined by ISO/IEC 13818-1 (MPEG-2 Part 1: Systems) includes four tables: PAT (program association table), CAT (conditional access table), PMT (program map table) and NIT (network information table). DVB transports include SI metadata (ETSI EN 300 468, ETSI TR 101 211) that links the various elementary streams into coherent programs and provides descriptions for electronic program guides as well as facilitates automatic searching and filtering.

Each DVB service must be encapsulated into MPEG2 Transport Stream (MPEG2TS). A proper MPEG2TS consists of several distinct elements i.e. PAT (Program Association Table) which lists DVB services (zero or more), PMT (Program Map Table) each PMT (one PMT per DVB Service) lists individual components within service and additional "DVB service" descriptors. DVB components typically are video, audio, subtitles substreams, data carousel (DSM-CC).

Sometimes there is a need to add some extra components into an existing DVB service i.e. local audio, subtitles or MHP Applications. In such cases remultiplexing must be applied that remaps certain components present in a source stream. Such systems however require appropriate configuration, which is very time consuming and complex.

It would be thus desirable to provide an efficient computer implemented method for digital video broadcasting service multiplexing from easily switchable sources.

The object of the present invention is a method for digital video broadcasting (DVB) services multiplexing, the method comprising the steps of: receiving at least two MPEG data streams each including at least one service signaled according to DVB PSI standard; analyzing the content of the services on the basis of PAT and PMT sections; receiving input selecting at least one parent service and at least one child service to be merged with the parent service and output; receiving and selecting allowable packets for further processing; informing the system, regarding content of the input services and changes in the input services; monitoring each addition or update of existing PAT and PMT sections in order to automatically apply changes in the parent service merged with the child service; providing a mapping mechanism between the input PIDs and the output PIDs; and outputting the parent service merged with the child service by selectively applying the mapping.

Preferably, the selecting at least one parent service and at least one child service to be merged with the parent service includes selecting all or some of the components of the parent service and/or the child service for outputting.

Preferably, it further comprises a step of setting up the preprocessor and parser as well as the PID matrix module using data of the PMT.

Preferably, it further comprises a step of notifying a Runtime Configuration module, by a PSI parser, regarding new services or updated services signaled in PAT and/or PMT.

Preferably, it further comprises a step of setting up the preprocessor and parser as well as the PID matrix module using data of the updated PAT/PMT.

Another object of the present invention is a system for digital video broadcasting (DVB) services multiplexing, the system comprising: at least two inputs configured to receive at least two MPEG data streams each including at least one service signaled according to DVB PSI standard; an input preprocessor and PSI parser configured to analyze the content of the services on the basis of PAT and PMT sections; a user defined configuration module configured to receive input selecting at least one parent service and at least one child service to be merged with the parent service and output; an input preprocessor and PSI parser configured to receive and select allowable packets for further processing; a PSI module configured to inform the system, regarding content of the input services and changes in the input services; whereas the PSI module is further configured to monitor each addition or update of existing PAT and PMT sections in order to automatically apply changes in the parent service merged with the child service; a PID matrix module configured to provide a mapping mechanism between the input PIDs and the output PIDs; and at least one output configured to output the parent service merged with the child service by selectively applying the mapping.

Another object of the present invention is a computer program comprising program code means for performing all the steps of the method according to the present invention when said program is run on a computer.

Another object of the present invention is a computer readable medium storing computer-executable instructions performing all the steps of the method according to the present invention when executed on a computer.

The present invention is shown by means of exemplary embodiments on a drawing, in which:
Figs. 1A - 1C present a schematic diagram of the method according to the present invention; and
Fig. 2A - 2B present an exemplary input and output configuration;
FIG. 3 depicts a diagram of the system according to the present invention.

Sometimes there is a need to add extra components into an existing DVB service i.e. local audio, subtitles or MHP Applications. The method according to the present invention is based on an assumption, that each extra component is signaled in its PMT - therefore it is formally a DVB-service. It is irrelevant whether it is just a single audio component or subtitles - it is a proper DVB-service.

For example there is defined a multiplexer having two logical/physical inputs and one output. On each input the multiplexer receives MPEG2TS with at least a single DVB-service. One service is AV-service with one video and several audio components. The second service is an MHP Application - usually comprises two components. The goal is to merge MHPApp-service into the AV-service. The way to achieve this is define a rule to merge components of one DVB-service into another DVB-service so that all additional signaling in PMT, component PID mapping can be done automatically by MUX.

In principle it is also possible to merge two different services of a single input MPEG2TS.

The present invention is aimed at adding components to an existing service of an MPEG data stream. A multiplexer according to the present invention may have n inputs and m outputs. In practice m < n but it is not a requirement.

According to the present invention the inputs of the multiplexer assume a proper MPEG2TS wherein a stream comprising at least one service must have the service properly signaled via PSI (PAT, PMT). In case the MPEG2TS does not comprise a service but raw data, it may not provide PSI data but only a stream of appropriate PIDs (eg. SDT, EIT, TOT, TDT, NIT or similar DVB data structures).

Addition of a component to an existing service shall preferably use only signaled components i.e. as if such component were a service (PAT, PMT signaling). Such approach means that the present invention is basically a service merging system.

The merging of services is preferably hierarchical meaning that one of the merged services is a parent service while the other services are child services.

Preferably, each of the input services may be mapped to any of the m outputs at the same time.

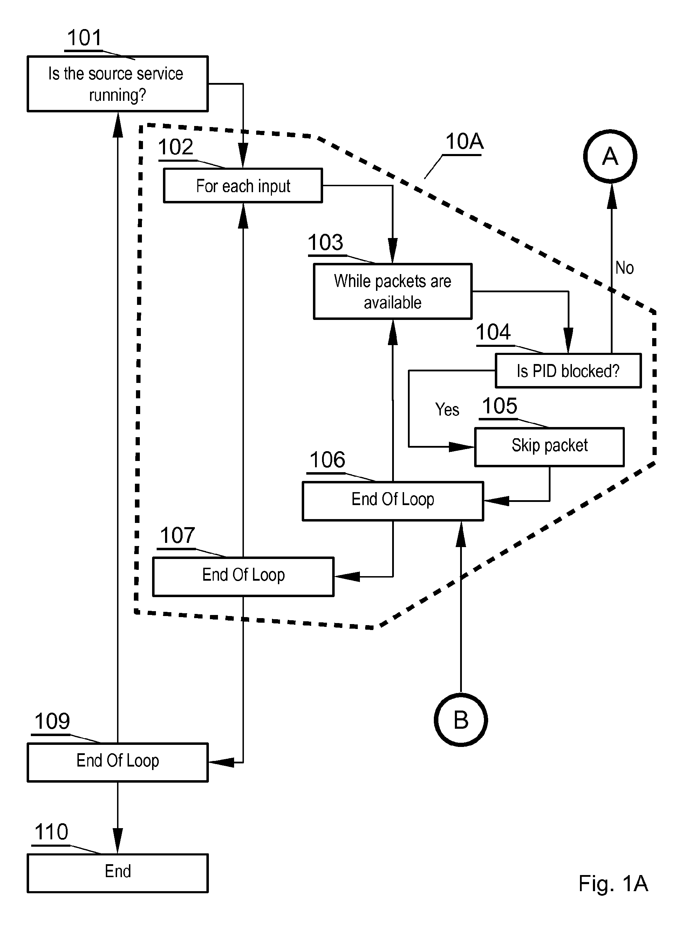

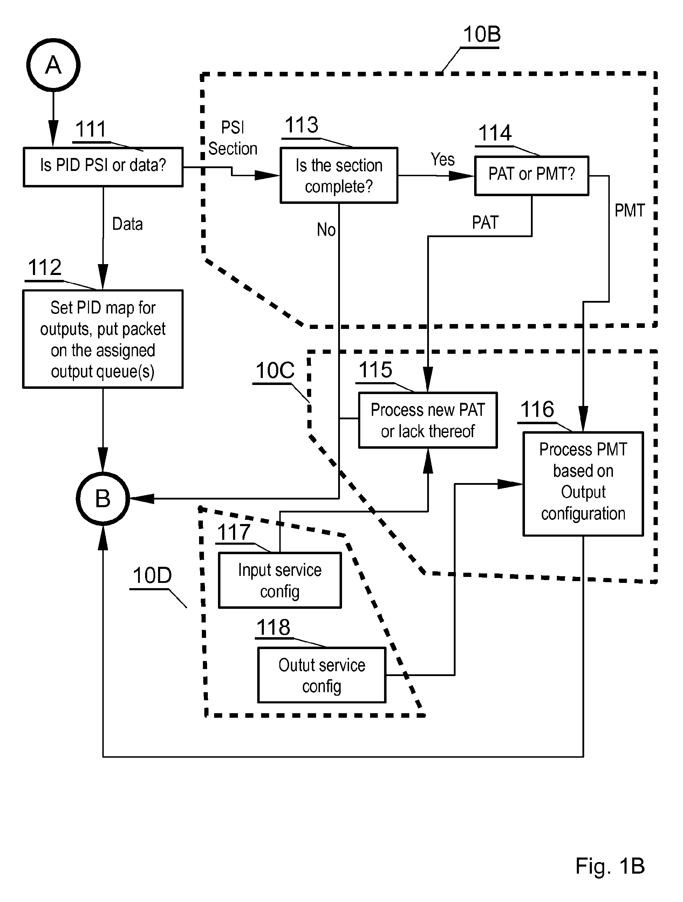

Figs. 1A - 1C present a schematic diagram of the method according to the present invention. The process starts at step 101 from checking whether the main service source is running (i.e. the service contents will be merged into). This check ensures that in case the main service is stopped the remaining process will also not be executed. Then the procedure moves to a group of steps 10A the aim of which is to receive and select available packets for processing by applying a rule, for example discarding packets having predefined packet identifier PID. It means that, for example, for each input 102 while packets are available on the input 103 a packet will be sent for further processing (A) when it is not blocked 104. Otherwise the packet will be skipped 105.

The purpose of the 10A section is to receive and select allowable packets for further processing. The section 10A may be called an input preprocessor.

The procedure follows from point (A) to step 111 where it is verified whether the received packet is a PSI packet or data packet. In case it is a data packet, at step 112 there is selected an appropriate PID mapping of the packet to an output(s) according to system's configuration after which the procedure returns to point (B).

In case a PSI Section is determined at step 111, the procedure enters section 10B, the purpose of which is to inform the system, in particular a Runtime Configuration module 313, regarding content of the output services and changes in the output services. Section 10B starts at step 113 where it is verified if the section is complete and the section is identified. In case the section is incomplete the procedure moves to point (B). Otherwise, when the section is complete, at step 114 it is verified whether the section concerns a PAT or PMT table.

Section 10B may be considered a PSI parser whose task is to parse PAT and PMT sections in order to report appropriate events to the Runtime Configuration module 313. Such events may include (a) new service notification (PAT event) - in a new PAT version there is a new service not present in the previous PAT version; (b) drop service (PAT Event) ) - in a new PAT version there is missing a service present in the previous PAT version (a drop service notification may be sent to all output services if for a predefined time there is not any PAT section received on a given input); (c) new service (PMT Event) - a notification sent when a new PMT has been identified; (d) change of service (PMT Event) - a notification sent when new version of a PMT has been identified for a given service.

When the section concerns a PAT table section the table data (or lack thereof) is processed 115 according to a configuration of the input service (117). The aforementioned allows the preprocessor and parser to start processing of a new service on the input. Such processing may concern obtaining appropriate data streams for processing from input(s). Subsequently this path of the process returns to point (B).

Element 10D collectively defines system's configuration. The 117 step includes user's configuration while the 118 step includes a dynamic configuration based on a current state of the multiplexing system. The user's configuration may include initial selection of source services and their parent/child relationship based on analysis of the input data, which are presented to the user as content available for selection. When the system receives selection of the services for multiplexing, the selection is stored in the module 118.

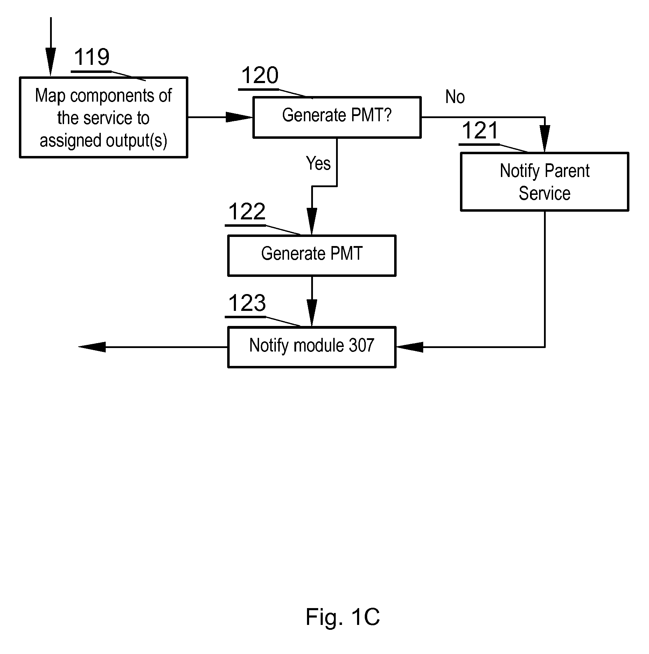

When the section concerns a PMT table section, the procedure advances to step 116 where the PMT table is processed based on the output configuration. Step 116 has been presented in more detail in Fig. 1C.

At step 119 the procedure maps components signaled in the new or updated PMT to assigned output(s). This process requires setting up the preprocessor and parser as well as the PID matrix module using data of the PMT. At step 120 it is verified whether a new PMT table is to be generated for the present service. New PMT is usually generated for main services including audio and video while a PMT is usually not generated for service components only, such as subtitles or applications, which are added to parent services. Accordingly, the parent service is notified of a new or updated PMT section data at step 121 or the new PMT is generated at step 122 after which the PSI output module 307 is notified regarding new or updated PMT data for a given input service.

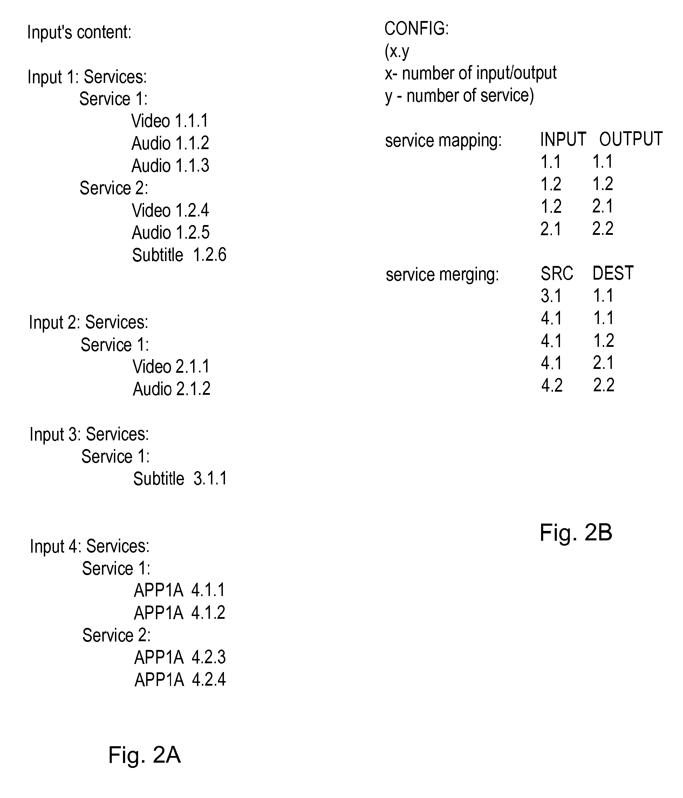

Fig. 2A - 2B present an exemplary input and output configuration. Fig. 2A presents the input content of four inputs wherein "Input 1" comprises two services 1 and 2. The service 1 of the input 1 comprises a video component 1.1.1, an audio component 1.1.2 and a second audio component 1.1.3. In turn the service 2 of the input 1 comprises a video component 1.2.4, an audio component 1.2.5 and a subtitles component 1.2.6.

In turn "Input 2" comprises a single service 1. The service 1 of the input 2 comprises a video component 2.1.1 and an audio component 2.1.2.

Similarly, "Input 3" comprises a single service 1. The service 1 of the input 3 comprises a subtitles component 3.1.1.

In turn "Input 4" comprises two individual services 1 and 2. The service 1 of the input 4 comprises a software component (application) 4.1.1 and a second software component 4.1.2 (for example MHP application (Xlet)). The service 2 of the input 4 comprises a software component (application) 4.2.3 and a second software component 4.2.4.

Fig. 2B presents the output configuration using the content of four inputs of Fig. 2A. The output is configured so that two outputs are used each comprising two services. This is defined by the service mapping section of the configuration. Additionally, there is present a service merging section of the configuration, which defines input streams/services that are to be merged into existing services defined in the service mapping section of the configuration. Notably, service 4.1 is to be merged into the 1.1 and 1.2 as well as the 2.1 outputs.

In view of the Fig. 2A and Fig. 2B configurations, service 1 of the output 1 will comprise the following input services: 1.1.1, 1.1.2, 1.1.3, 3.1.1, 4.1.1 and 4.1.2. In turn service 2 of the output 1 will comprise the following input services: 1.2.4, 1.2.5, 1.2.6, 4.1.1 and 4.1.2.

As may be seen in the output configuration, the output streams 1.2 and 2.1 will comprise the same content of the 1.2 and 4.1 inputs.

The last output i.e. 2.2 will comprise the following input services: 1.2.4, 1.2.5, 1.2.6, 4.2.3 and 4.2.4.

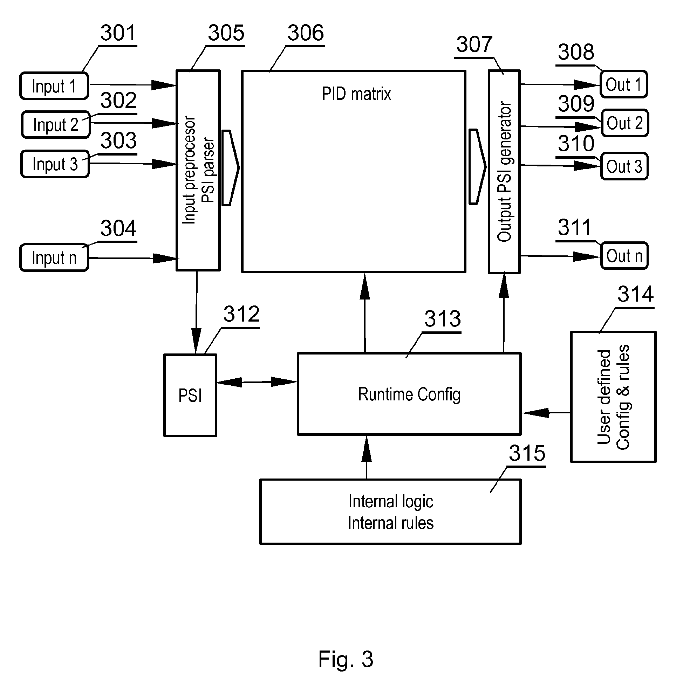

FIG. 3 depicts a diagram of the system according to the present invention. The system comprises at least one input but typically multiple inputs are present (301 - 304). The input data are passed to an input preprocessor and PSI parser 305, which executes steps 10A and 10B if the method according to the present invention.

The input preprocessor and PSI parser 305 communicates with the PSI module 312, which processes PSI data and notifies events (such as new service, service drop, new PMT table) to the Runtime Config module 313 managing the multiplexer. Further the input preprocessor passes selected data packets to a PID matrix module 306.

The input data packets (step 112 of the procedure) are passed from the input preprocessor and PSI parser 305 to a PID matrix module 306 responsible for mapping input PIDs to output PIDs. For this purpose there is maintained a matrix of up to [n, 8192] of m-dimensional (number of outputs) values of output PIDs. The 8192 is a maximum number of unique PID values in a service stream. It is the task of the PID matrix to read the PID of an input packet and find its value in the matrix in order to modify it in case the output PID value for the given input PID value differ. For example a mapping means that packets from Input 1 - Service 1 having PIDs values equal to 1344 will be output as packets of Output 1 - Service 2 having PID values equal to 733.

The PID matrix module 306 receives its configuration from the Runtime Config module 313. The role of the Runtime Config module 306 is to manage the entire multiplexer based on input from an internal logic and rules module 315 and user defined configuration and rules stored in the 314 module. An example of a rule may be that in case a parent service is stopped the depending child services will not be output by the multiplexer.

The main task of the Runtime Config module 313 is to manage inputs, outputs, the PID Matrix 306 and PSI module 312. Its operations are defined by an external configuration (for example a configuration file) as well as by PSI input data. The Runtime Config module 306 may implement additional filtering rules applicable to PIDs.

After mapping by the PID matrix module 306 a packet is added to appropriate packet queues. Packets within queues may have priorities and are subsequently multiplexed with packets generated by an output PSI generator 307 and with null packets (PID = 0x1 FFF (8191)) and physically output by appropriate outputs 308 - 311. The packet priorities are used to determine which packets are to be discarded first when the output bandwidth is full. Packets having lowest priority will be discarded first.

It can be easily recognized, by one skilled in the art, that the aforementioned method for digital video broadcasting service multiplexing may be performed and/or controlled by one or more computer programs. Such computer programs are typically executed by utilizing the computing resources of the device. The computer programs can be stored in a non-volatile memory, for example a flash memory or in a volatile memory (or otherwise a non-transitory computer readable medium), for example RAM and are executed by the processing unit. These memories are exemplary recording media for storing computer programs comprising computer-executable instructions performing all the steps of the computer-implemented method according the technical concept presented herein.

While the invention presented herein has been depicted, described, and defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

In addition, any combination of the appended claims in envisaged in the present application.

## Claims

1. Method for digital video broadcasting (DVB) services multiplexing, the method being **characterized in that** it comprises the steps of:
o receiving at least two MPEG data streams (301 - 304) each including at least one service signaled according to DVB PSI standard;
o analyzing the content of the services on the basis of PAT and PMT sections;
o receiving input selecting at least one parent service and at least one child service to be merged with the parent service and output;
o receiving (301 - 304) and selecting allowable packets for further processing (10A);
o informing (10B) the system (313), regarding content of the input services and changes in the input services;
o monitoring each addition or update of existing PAT and PMT sections in order to automatically apply changes in the parent service merged with the child service;
o providing a mapping mechanism between the input (301 - 304) PIDs and the output (308 - 311) PIDs; and
○ outputting (308 - 311) the parent service merged with the child service by selectively applying the mapping.

2. The method according to claim 1 **characterized in that** the selecting at least one parent service and at least one child service to be merged with the parent service includes selecting all or some of the components of the parent service and/or the child service for outputting.

3. The method according to claim 1 **characterized in that** it further comprises a step of setting up the preprocessor and parser as well as the PID matrix module using data of the PMT.

4. The method according to claim 1 **characterized in that** it further comprises a step of notifying a Runtime Configuration module (313), by a PSI parser, regarding new services or updated services signaled in PAT and/or PMT.

5. The method according to claim 4 **characterized in that** it further comprises a step of setting up the preprocessor and parser as well as the PID matrix module using data of the updated PAT/PMT.

6. A system for digital video broadcasting (DVB) services multiplexing, the system being **characterized in that** it comprises:
o at least two inputs (301 - 304) configured to receive at least two MPEG data streams each including at least one service signaled according to DVB PSI standard;
o an input preprocessor and PSI parser (305) configured to analyze the content of the services on the basis of PAT and PMT sections;
o a user defined configuration module (314) configured to receive input selecting at least one parent service and at least one child service to be merged with the parent service and output;
o an input preprocessor and PSI parser (305) configured to receive (301 - 304) and select allowable packets for further processing (10A);
o a PSI module (312) configured to inform (10B) the system (313), regarding content of the input services and changes in the input services;
o whereas the PSI module (312) is further configured to monitor each addition or update of existing PAT and PMT sections in order to automatically apply changes in the parent service merged with the child service;
o a PID matrix module configured to provide a mapping mechanism between the input (301 - 304) PIDs and the output (308 - 311) PIDs; and
o at least one output (308 - 311) configured to output the parent service merged with the child service by selectively applying the mapping.

7. A computer program comprising program code means for performing all the steps of the method according to claim 1 when said program is run on a computer.

8. A computer readable medium storing computer-executable instructions performing all the steps of the method according to claim 1 when executed on a computer.
